# EUROPEAN PATENT APPLICATION

(11) **EP 4 394 837 A1**
(43) Date of publication of application: **03.07.2024**
(21) Application number: 22897699.9
(22) Date of filing: 17.11.2022
(51) Int. Cl.: H01H 50/58, B60L 53/16

(54) **CONTACTOR, CHARGING AND POWER DISTRIBUTION SYSTEM, VEHICLE, AND CHARGING PILE**

(30) Priority: 23.11.2021 CN 202111395077
(71) Applicant: BYD Company Limited, Shenzhen, Guangdong 518118 (CN)
(72) Inventor: HUANG, Tuodi, Shenzhen, Guangdong 518118 (CN); XUE, Penghui, Shenzhen, Guangdong 518118 (CN); CHEN, Mingwen, Shenzhen, Guangdong 518118 (CN); JIANG, Hong, Shenzhen, Guangdong 518118 (CN); MA, Shengqian, Shenzhen, Guangdong 518118 (CN)
(74) Representative: Arnold & Siedsma
(86) International application number: PCT/CN2022/132635
(87) International publication number: WO 2023/093616

(57) **Abstract**

A contactor is disclosed, and includes: a terminal group including a first terminal and a second terminal; a conductive strip including a first conduction section and a second conduction section that are movably connected, where the first conduction section is connected to the first terminal; a microswitch connected to the second conduction section, where at least two microswitches, at least two conductive strips, and at least two terminal groups are arranged and in a one-to-one correspondence; and a driving component configured to drive the at least two microswitches to rotate for driving to implement selective disconnection or connection between corresponding second conduction sections and second terminals. The present disclosure also discloses a charging and distribution system, a vehicle, and a charging pile. The contactor can implement synchronous on-off of multiple high-voltage circuits, and reduce the number of parts of the driving component, thereby reducing the number of risk points, making the contactor more compact in shape, and facilitating miniaturization and lightweight design of the contactor.

## Description

### CROSS-REFERENCE TO RELATED APPLICATIONS

This application claims priority to Chinese Patent Application No. 202111395077.X filed on November 23, 2021, which is incorporated herein by reference in its entirety.

### FIELD

The present disclosure relates to the field of electrical equipment manufacturing, and more specifically, to a contactor, a charging and distribution system with the contactor, a vehicle with the charging and distribution system, and a charging pile with the contactor.

### BACKGROUND

In the related art, a low-voltage circuit of a contactor is inefficient, causing the low-voltage circuit to have a large size, which leads to a large overall size and poor heat dissipation performance of the contactor, and makes it difficult to implement synchronous on-off of multiple circuits, for which there is room for improvement.

### SUMMARY

The present disclosure aims to resolve at least one of the technical problems existing in the related art. Therefore, the present disclosure is intended to provide a contactor, so as to implement synchronous on-off of multiple high-voltage circuits, facilitate heat dissipation, and achieve high safety and reliability.

The contactor according to an embodiment of the present disclosure includes: a terminal group including a first terminal and a second terminal; a conductive strip including a first conduction section and a second conduction section that are movably connected, where the first conduction section is connected to the first terminal; a microswitch connected to the second conduction section, where at least two microswitches, at least two conductive strips, and at least two terminal groups are arranged and in a one-to-one correspondence; and a driving component configured to drive the at least two microswitches to rotate for driving to implement selective disconnection or connection between corresponding second conduction sections and second terminals.

The contactor according to this embodiment of the present disclosure is provided with at least two microswitches and conductive strips, and the at least two microswitches and conductive strips share the same driving component, so that the at least two microswitches are controlled by the same driving component to rotate simultaneously and drive the at least two conductive strips to rotate simultaneously, thereby implementing synchronous on-off of multiple high-voltage circuits, reducing the number of parts of the driving component, reducing the number of risk points, making the contactor more compact in shape, and facilitating miniaturization and lightweight design of the contactor.

In the contactor according to some embodiments of the present disclosure, the driving component includes a driving coil and two magnetic driving pieces. Two microswitches are arranged and in a one-to-one correspondence with the two magnetic driving pieces. The driving coil is configured to change a magnetic state of the magnetic driving pieces to drive the microswitches to rotate.

In the contactor according to some embodiments of the present disclosure, the driving component further includes a magnetic column and magnetic conductive plates connected to two ends of the magnetic column. The driving coil is wound around the magnetic column, and the two magnetic driving pieces are respectively arranged on two sides of the magnetic column and both are connected to the two magnetic conductive plates.

In the contactor according to some embodiments of the present disclosure, each magnetic driving piece includes a first magnetic conductive sheet and a second magnetic conductive sheet that are spaced apart. The first magnetic conductive sheet is connected to a magnetic conductive plate at a first end of the magnetic column, and the second magnetic conductive sheet is connected to a magnetic conductive plate at a second end of the magnetic column. A first end of the microswitch is provided with a first magnetic pole and a second magnetic pole that are spaced apart, and a second end of the microswitch is provided with a third magnetic pole and a fourth magnetic pole that are spaced apart. The first magnetic conductive sheet extends between the first magnetic pole and the second magnetic pole for engagement with one of the first magnetic pole and the second magnetic pole, and the second magnetic conductive sheet extends between the third magnetic pole and the fourth magnetic pole for engagement with one of the third magnetic pole and the fourth magnetic pole.

In the contactor according to some embodiments of the present disclosure, a polarity of the first magnetic conductive sheet is opposite to a polarity of the second magnetic conductive sheet, a polarity of the first magnetic pole is opposite to a polarity of the second magnetic pole, and a polarity of the third magnetic pole is opposite to a polarity of the fourth magnetic pole.

In the contactor according to some embodiments of the present disclosure, a polarity of the first magnetic conductive sheet is opposite to a polarity of the second magnetic conductive sheet. Both the first magnetic pole and the second magnetic pole are constructed with opposite polarities on an inner side and an outer side, and the polarity of the inner side of the first magnetic pole is opposite to the polarity of the inner side of the second magnetic pole. Both the third magnetic pole and the fourth magnetic pole are constructed with opposite polarities on an inner side and an outer side, and the polarity of the inner side of the third magnetic pole is opposite to the polarity of the inner side of the fourth magnetic pole.

In the contactor according to some embodiments of the present disclosure, the first magnetic pole and the third magnetic pole are integrally formed, and the second magnetic pole and the fourth magnetic pole are integrally formed.

In the contactor according to some embodiments of the present disclosure, the first end of the microswitch is provided with a first magnet constructed in a U shape, two ends of the first magnet are respectively constructed as the first magnetic pole and the second magnetic pole, the second end of the microswitch is provided with a second magnet constructed in a U shape, and two ends of the second magnet are respectively constructed as the third magnetic pole and the fourth magnetic pole.

In the contactor according to some embodiments of the present disclosure, a first magnetic plate and a second magnetic plate are respectively arranged on two sides of the microswitch, a magnetic member is arranged between the first magnetic plate and the second magnetic plate, polarities of two ends of the magnetic member are opposite, a polarity of the first magnetic plate is the same as a polarity of a first end of the magnetic member, and a polarity of the second magnetic plate is the same as a polarity of a second end of the magnetic member. Two ends of the first magnetic plate are respectively constructed as the first magnetic pole and the third magnetic pole, and two ends of the second magnetic plate are respectively constructed as the second magnetic pole and the fourth magnetic pole.

In the contactor according to some embodiments of the present disclosure, the microswitch includes a driving board and a clamping piece connected to the driving board. The first magnetic pole, the second magnetic pole, the third magnetic pole, and the fourth magnetic pole are respectively arranged at four corners of the driving board, the clamping piece is provided with a clamping port, and the second conduction section is clamped in the clamping port.

In the contactor according to some embodiments of the present disclosure, the first terminal and the second terminal are arranged opposite to the conductive strip in a first direction, and at least one of the conductive strip, the first terminal, and the second terminal is arranged opposite to the driving component in a second direction. The first direction is orthogonal to the second direction.

In the contactor according to some embodiments of the present disclosure, the conductive strip further includes a flexible connecting piece connected between the first conduction section and the second conduction section. The second conduction section is adapted to move toward or away from the second terminal through deformation of the flexible connecting piece.

The contactor according to some embodiments of the present disclosure further includes: a sensor arranged close to the first terminal, the second terminal, or the conductive strip to detect a circuit signal of the first terminal, the second terminal, or the conductive strip in real time; and a controller electrically connected to the sensor to control, according to the circuit signal, the driving component to switch off or switch on the electrical connection between the second conduction section and the second terminal.

In the contactor according to some embodiments of the present disclosure, the controller is configured to obtain a temperature, a voltage, or a current of the first terminal, the second terminal, or the conductive strip according to the circuit signal. The controller is configured to: for the first terminal, the second terminal, or the conductive strip, when the temperature is greater than a first temperature threshold, and/or the voltage is greater than a first voltage threshold, and/or the current is greater than a first current threshold, switch off the electrical connection between the second conduction section and the second terminal.

In the contactor according to some embodiments of the present disclosure, the controller is configured to: for the first terminal, the second terminal, or the conductive strip, when the temperature is less than a second temperature threshold, and/or the voltage is less than a second voltage threshold, and/or the current is less than a second current threshold, switch on the electrical connection between the second conduction section and the second terminal. The second temperature threshold is less than or equal to the first temperature threshold, the second voltage threshold is less than or equal to the first voltage threshold, and the second current threshold is less than or equal to the first current threshold.

The contactor according to some embodiments of the present disclosure further includes a housing defining an accommodating space. The conductive strip, the first terminal, the second terminal, and the driving component are arranged in the accommodating space, and at least a portion of the first terminal and the second terminal is extended out of the housing.

In the contactor according to some embodiments of the present disclosure, a low-voltage signal end is further arranged outside the housing, and is connected to the driving coil.

The present disclosure also provides a charging and distribution system.

The charging and distribution system according to an embodiment of the present disclosure is provided with the contactor in any one of the foregoing embodiments.

The present disclosure also provides a vehicle.

The vehicle according to an embodiment of the present disclosure is provided with the charging and distribution system in any one of the foregoing embodiments.

The present disclosure also provides a charging pile.

The charging pile according to some embodiments of the present disclosure is provided with the contactor in any one of the foregoing embodiments.

The charging and distribution system, the vehicle, the charging pile, and the contactor have the same advantages over the related art, which are not described in detail herein.

Additional aspects and advantages of the present disclosure are set forth in the following description, some of which will become apparent in the following description, or be learned through practice of the present disclosure.

### BRIEF DESCRIPTION OF THE DRAWINGS

These and/or additional aspects and advantages of the present disclosure will become apparent and more readily appreciated from the following description made with reference to the drawings, wherein:
FIG. 1 is a schematic structural diagram of a contactor according to some embodiments of the present disclosure;
FIG. 2 is a side view of a contactor according to some embodiments of the present disclosure;
FIG. 3 is a top view of a contactor according to some embodiments of the present disclosure;
FIG. 4 is a cross-sectional view along A-A in FIG. 3;
FIG. 5 is a schematic structural diagram (without a housing) of a contactor according to an embodiment of the present disclosure;
FIG. 6 is a top view of the contactor in FIG. 5;
FIG. 7 is a cross-sectional view along B-B in FIG. 6;
FIG. 8 is a front view of the contactor in FIG. 6;
FIG. 9 is a schematic assembly diagram (a first contact state) of a driving component and a microswitch according to some embodiments of the present disclosure;
FIG. 10 is a top view of FIG. 9;
FIG. 11 is a front view of FIG. 9;
FIG. 12 is a schematic assembly diagram (a second contact state) of a driving component and a microswitch according to some embodiments of the present disclosure;
FIG. 13 is a top view of FIG. 12;
FIG. 14 is a front view of FIG. 12;
FIG. 15 is a schematic structural diagram (without a housing) of a contactor according to some other embodiments of the present disclosure;
FIG. 16 is a top view of FIG. 15;
FIG. 17 is a front view of a driving component according to some embodiments of the present disclosure;
FIG. 18 is a schematic structural diagram of a driving component according to some embodiments of the present disclosure;
FIG. 19 is a top view of a driving component according to some embodiments of the present disclosure;
FIG. 20 is a schematic structural diagram of a microswitch according to some embodiments of the present disclosure;
FIG. 21 is a schematic structural diagram of a microswitch according to some other embodiments of the present disclosure; and
FIG. 22 is a schematic structural diagram of a microswitch according to still some other embodiments of the present disclosure.

### Reference numerals:

100: contactor; and
1: first terminal; 2: second terminal; 3: conductive strip; 31: first conduction section; 32: second conduction section; 33: flexible connecting piece; 4: microswitch; 41: first magnetic pole; 42: second magnetic pole; 43: third magnetic pole; 44: fourth magnetic pole; 45: first magnet; 46: second magnet; 47: first magnetic plate; 48: second magnetic plate; 49: magnetic member; 5: driving component; 51: driving coil; 52: magnetic driving piece; 521: first magnetic conductive sheet; 522: second magnetic conductive sheet; 53: magnetic column; 54: magnetic conductive plate; 61: driving board; 62: clamping piece; 63: clamping port; 7: housing; 71: mounting piece; 711: mounting hole; 8: low-voltage signal end; and 9: sensor.

### DETAILED DESCRIPTION

The embodiments of present disclosure are described in detail below, and examples thereof are illustrated in the drawings, throughout which identical or similar elements or elements having identical or similar functions are represented with identical or similar reference numerals. The following embodiments described with reference to the drawings are exemplary, and are intended only to interpret the present disclosure, instead of limiting the present disclosure.

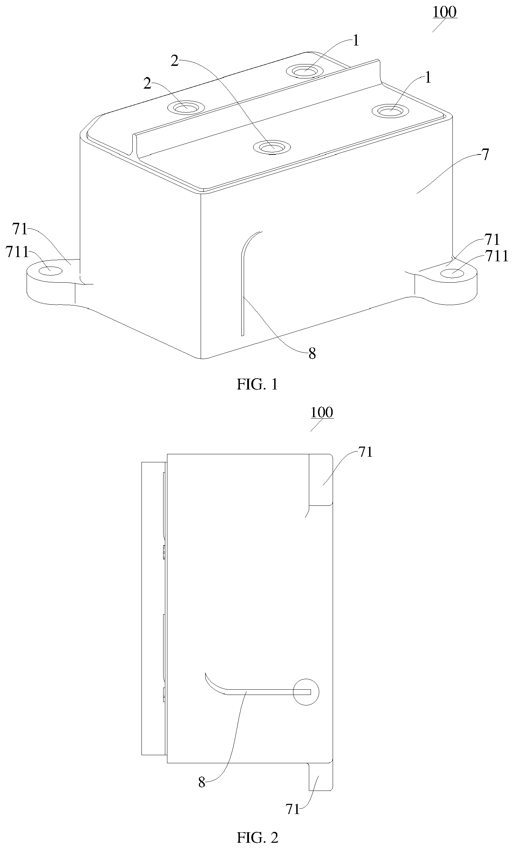

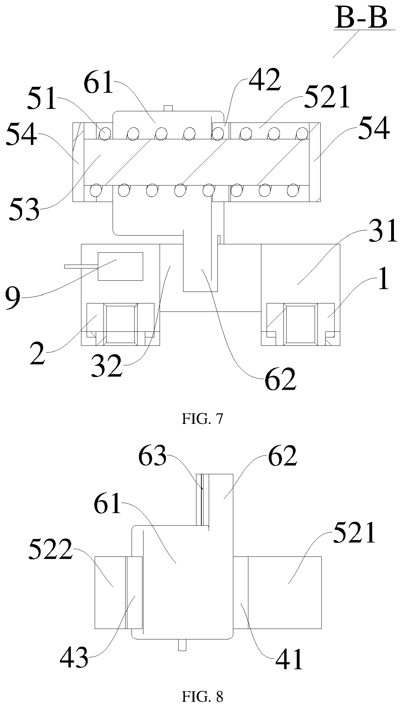

A contactor 100 according to the embodiments of the present disclosure is described below with reference to FIGs. 1 to 19. The contactor 100 is provided with at least two terminal groups, that is, at least two high-voltage circuits are arranged on the contactor 100. In addition, the contactor 100 is provided with at least two microswitches 4 and conductive strips 3. The at least two microswitches 4 and conductive strips 3 share the same driving component, so that the at least two microswitches 4 are controlled by the same driving component to rotate simultaneously, and the at least two microswitches 4 drive the at least two conductive strips 3 to rotate simultaneously, to implement synchronous on-off of the at least two high-voltage circuits.

This helps improve integration of the contactor 100, improve space utilization inside the contactor 100, and reduce the number of parts of the driving component 5, thereby reducing the number of risk points, making the contactor 100 more compact in shape, and facilitating miniaturization and lightweight design of the contactor 100.

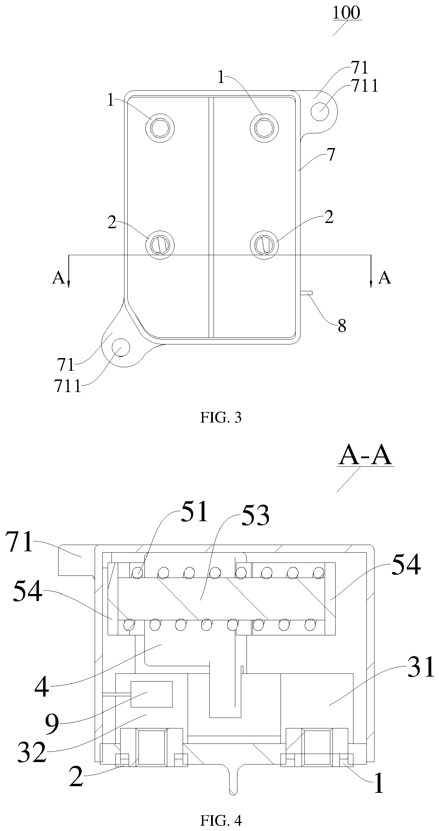

As shown in FIGs. 4 to 8, the contactor 100 according to the embodiments of the present disclosure includes: a terminal group, a conductive strip 3, a microswitch 4, and a driving component 5.

As shown in FIG. 1, the terminal group includes a first terminal 1 and a second terminal 2, at least two terminal groups are arranged, the two terminal groups are spaced apart on a side of the contactor 100, and the first terminal 1 and the second terminal 2 are selectively connected. Therefore, at least two high-voltage circuits can be formed on the contactor 100.

Further, the conductive strip 3 includes a first conduction section 31 and a second conduction section 32 that are movably connected. A composite metal such as soft copper (silver) is added into a material of the conductive strip 3, so that the conductive strip 3 can be made of a new material with smaller volume and smaller mass, and the conductive strip 3 can have a larger current carrying capacity. This can also reduce the number of moving contacts, reduce high-voltage power consumption caused by the moving contacts, reduce arcing, reduce adhesion points, and reduce action wear generated during circuit control of the contactor 100. In short, risk points and a power loss are reduced.

During operation of the contactor 100, the second conduction section 32 impacts the second terminal 2, and operating noise occurs. To reduce the operating noise of the contactor 100, the conductive strip 3 of the present disclosure may be constructed as a flexible member, which may be made of a flexible metal material (for example, a soft copper composite material or a soft silver composite material), to reduce impact noise and improve use experience of the contactor 100. In addition, using the flexible metal material can increase a current, reduce contact resistance between the second terminal 2 and the conductive strip 3, and reduce a probability of adhesion between the two.

It should be noted that, that the first conduction section 31 and the second conduction section 32 are movably connected means that the two may be connected by a conductive rotary connecting structure to implement relative rotation, or may be connected by a flexible structural member (that is, at least a portion of the conductive strip 3 is constructed as a flexible structure) and implement relative rotation through bending of the flexible structure, or the conductive strip 3 may be wholly constructed as a flexible member and implement relative rotation through bending. With the foregoing structure, bending wear of the conductive strip 3 is smaller during rotation of the second conduction section 32, which can prolong the service life of the conductive strip 3, to prolong the service life of the contactor 100.

Specifically, the first conduction section 31 is connected to the first terminal 1, and the microswitch 4 is connected to the second conduction section 32. At least two microswitches 4, at least two conductive strips 3, and at least two terminal groups are arranged and in a one-to-one correspondence. The driving component 5 is configured to drive the at least two microswitches 4 to rotate for driving to implement selective disconnection or connection between corresponding second conduction sections 32 and second terminals 2.

It can be understood that the first conduction section 31 is connected to the first terminal 1, and the microswitch 4 is connected to the second conduction section 32 to drive the second conduction section 32 to rotate. Specifically, during actual control of the contactor 100, the driving component 5 drives the microswitch 4 so that the microswitch 4 drives the second conduction section 32 to move toward/away from the second terminal 2, so as to implement selective connection or disconnection between the second conduction section 32 and the second terminal 2.

Therefore, the first terminal 1 and the second terminal 2 may be electrically connected or disconnected selectively by the conductive strip 3, and the driving component 5 is configured to drive the microswitch 4 to drive the conductive strip 3 to move, so as to implement the connection or disconnection between the first terminal 1 and the second terminal 2.

Optionally, in the present disclosure, two microswitches 4, two conductive strips 3, and two terminal groups are arranged and in a one-to-one correspondence. The first terminal 1 and the second terminal 2 are electrically connected through the conductive strip 3 by controlling selective disconnection or connection between the second conduction section 32 and the second terminal 2, so that the first terminal 1 forms a high-voltage circuit with the second terminal 2 through the conductive strip 3.

The first conduction section 31 is connected to the first terminal 1, and the microswitch 4 is connected to the second conduction section 32 to drive the second conduction section 32 to rotate. Specifically, during actual control of the contactor 100, the driving component 5 simultaneously drives the two microswitches 4 so that the two microswitches 4 drive two corresponding second conduction sections 32 to move toward/away from corresponding second terminals 2, so as to implement selective connection or disconnection between the two second conduction sections 32 and the corresponding second terminals 2.

Therefore, the two microswitches 4 are simultaneously controlled by the one driving component 5, which helps reduce the number of parts of the driving component 5, reduce the number of risk points, make the contactor 100 more compact in shape, and facilitate miniaturization and lightweight design of the contactor 100. In addition, the at least two microswitches 4 are controlled by the same driving component to rotate simultaneously, thereby implementing synchronous on-off of multiple high-voltage circuits, and enhancing practicability of the contactor 100.

The contactor 100 according to the embodiments of the present disclosure is provided with at least two microswitches 4 and conductive strips 3, and the at least two microswitches 4 and conductive strips 3 share the same driving component, so that the at least two microswitches 4 are controlled by the same driving component to rotate simultaneously and drive the at least two conductive strips 3 to rotate simultaneously, thereby implementing synchronous on-off of multiple high-voltage circuits, reducing the number of parts of the driving component 5, reducing the number of risk points, making the contactor 100 more compact in shape, and facilitating miniaturization and lightweight design of the contactor 100.

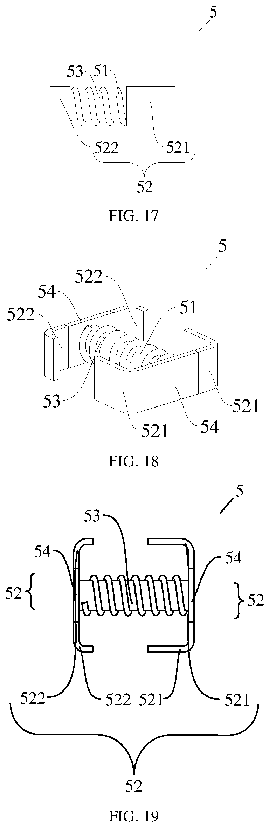

In some embodiments, as shown in FIG. 17, the driving component 5 includes a driving coil 51 and two magnetic driving pieces 52, the two magnetic driving pieces 52 may be respectively arranged at two ends of the driving coil 51, and the driving coil 51 may be connected to the magnetic driving pieces 52.

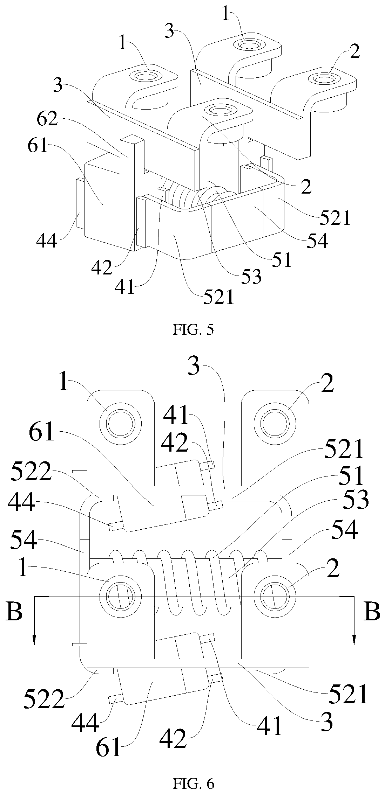

Further, as shown in FIGs. 5 and 6, two microswitches 4 are arranged and in a one-to-one correspondence with the two magnetic driving pieces 52, that is, each magnetic driving piece 52 can drive a corresponding microswitch 4 to rotate. The driving coil 51 is configured to change a magnetic state of the magnetic driving pieces 52 to drive the microswitches 4 to rotate.

For example, the driving coil 51 may be supplied with a low-voltage current, and a magnetic state of the magnetic driving piece 52 connected to the driving coil 51 is changed by changing a flow direction of the current in the driving coil 51, so that the magnetic driving piece 52 can generate different magnetic fields, and under the action of the magnetic fields, the magnetic driving piece 52 generates a magnetic driving force for the microswitch 4 to move toward or away from the magnetic driving piece 52. Therefore, with the magnetic driving force, the second conduction section 32 of the conductive strip 3 rotates toward/away from the second terminal 2.

It should be noted that, when the current flowing in the driving coil 51 has an opposite flow direction, the two magnetic driving pieces 52 have an opposite magnetic state.

Therefore, the magnetic state of the magnetic driving pieces 52 is changed by changing the flow direction of the low-voltage current flowing through the driving coil 51, to drive the two microswitches 4 to rotate toward/away from corresponding second terminals 2, so as to control whether first terminals 1 are electrically connected to the second terminals 2 through conductive strips 3, thereby simultaneously controlling on-off statuses of two high-voltage circuits. This facilitates synchronous on-off of multiple high-voltage circuits, facilitates heat dissipation, and achieves high safety and reliability.

Further, as shown in FIGs. 17 to 19 the driving component 5 further includes a magnetic column 53 and magnetic conductive plates 54 connected to two ends of the magnetic column 53.

The driving coil 51 is wound around the magnetic column 53. That is, in the contactor 100 of the present disclosure, the driving coil 51 can be fastened by winding the driving coil 51 around the magnetic column 53, to enhance structural stability of the driving coil 51, and the magnetic column 53 can enhance a magnetic field generated by the driving coil 51. Therefore, when the contactor 100 is supplied with power, a current flows into the driving coil 51, so that the driving coil 51 generates a magnetic field, and the magnetic column 53 can enhance the magnetic field generated by the driving coil 51, thereby enhancing the magnetic driving force of the driving component 5 to the microswitch 4, making the second conduction section 32 of the conductive strip 3 rotate toward/away from the second terminal 2 more quickly, improving on-off efficiency of the high-voltage circuit of the contactor 100, and enhancing sensitivity of the contactor 100.

As shown in FIG. 19, the two magnetic driving pieces 52 are respectively arranged on two sides of the magnetic column 53 and both are connected to the two magnetic conductive plates 54. It can be understood that the two magnetic conductive plates 54 are respectively arranged at the two ends of the magnetic column 53, and each magnetic conductive plate 54 is connected to one magnetic driving piece 52, so that magnetism generated by the magnetic column 53 is transferred to the magnetic driving piece 52 through the magnetic conductive plate 54.

Each magnetic driving piece 52 includes a first magnetic conductive sheet 521 and a second magnetic conductive sheet 522 that are spaced apart. As shown in FIG. 19, first magnetic conductive sheets 521 corresponding to the two magnetic driving pieces 52 are symmetrically arranged on two sides of the magnetic conductive plate 54, and second magnetic conductive sheets 522 corresponding to the two magnetic driving pieces 52 are also symmetrically arranged on the two sides of the magnetic conductive plate 54.

Specifically, as shown in FIG. 19, the first magnetic conductive sheet 521 is connected to a magnetic conductive plate 54 at a first end of the magnetic column 53, and the second magnetic conductive sheet 522 is connected to a magnetic conductive plate 54 at a second end of the magnetic column 53, so that the magnetic conductive plate 54 at the first end of the magnetic column 53 transfers magnetism generated by the driving coil 51 to the first magnetic conductive sheet 521 to change a magnetic state of the first magnetic conductive sheet 521, and the magnetic conductive plate 54 at the second end of the magnetic column 53 transfers magnetism generated by the driving coil 51 to the second magnetic conductive sheet 522 to change a magnetic state of the second magnetic conductive sheet 522.

It should be noted that, magnetic states generated by the first magnetic conductive sheet 521 and the second magnetic conductive sheet 522 are opposite.

Further, a first end of the microswitch 4 is provided with a first magnetic pole 41 and a second magnetic pole 42 that are spaced apart, and a second end of the microswitch 4 is provided with a third magnetic pole 43 and a fourth magnetic pole 44 that are spaced apart. The first magnetic conductive sheet 521 extends between the first magnetic pole 41 and the second magnetic pole 42 for engagement with one of the first magnetic pole 41 and the second magnetic pole 42, and the second magnetic conductive sheet 522 extends between the third magnetic pole 43 and the fourth magnetic pole 44 for engagement with one of the third magnetic pole 43 and the fourth magnetic pole 44.

It can be understood that the first magnetic pole 41 and the second magnetic pole 42 are both arranged at the first end of the microswitch 4, and are spaced apart so that a movable space is defined between the first magnetic pole 41 and the second magnetic pole 42, the first magnetic conductive sheet 521 extends into the movable space, and the first magnetic conductive sheet 521 can rotate in the movable space; and the third magnetic pole 43 and the fourth magnetic pole 44 are both arranged at the second end of the microswitch 4, and are spaced apart so that a movable space is defined between the third magnetic pole 43 and the fourth magnetic pole 44, the second magnetic conductive sheet 522 extends into the movable space, and the second magnetic conductive sheet 522 can rotate in the movable space.

It should be noted that, the first magnetic conductive sheet 521 extends between the first magnetic pole 41 and the second magnetic pole 42, and the second magnetic conductive sheet 522 extends between the third magnetic pole 43 and the fourth magnetic pole 44, so that the first magnetic pole 41 and the second magnetic pole 42 can be limited by the first magnetic conductive sheet 521, and the third magnetic pole 43 and the fourth magnetic pole 44 can be limited by the second magnetic conductive sheet 522, thereby preventing the microswitch 4 from disengaging, and enhancing structural stability of the microswitch 4.

Then, polarities of the first magnetic conductive sheet 521 and the second magnetic conductive sheet 522 are changed by supplying currents of different flow directions in the driving coil 51, so that under the action of the magnetic driving force, the first magnetic conductive sheet 521 moves toward one of the first magnetic pole 41 and the second magnetic pole 42 whose polarity is opposite to a polarity of the first magnetic conductive sheet 521, and the second magnetic conductive sheet 522 moves toward one of the third magnetic pole 43 and the fourth magnetic pole 44 whose polarity is opposite to a polarity of the second magnetic conductive sheet 521.

It should be noted that, under the action of the magnetic driving force, the first magnetic conductive sheet 521 generates a thrust force to one of the first magnetic pole 41 and the second magnetic pole 42 whose polarity is the same as the polarity of the first magnetic conductive sheet 521, and the second magnetic conductive sheet 522 also generates a thrust force to one of the third magnetic pole 43 and the fourth magnetic pole 44 whose polarity is the same as the polarity of the second magnetic conductive sheet 522, which increases a rotation speed of the microswitch 4, thereby increasing an on-off speed of the high-voltage circuit of the contactor 100, and enhancing practicability of the contactor 100.

Therefore, the polarities of the first magnetic conductive sheet 521 and the second magnetic conductive sheet 522 can be changed by supplying a current in the driving coil 51, so that the first magnetic conductive sheet 521 can be engaged with either of the first magnetic pole 41 and the second magnetic pole 42, and the second magnetic conductive sheet 522 can be engaged with either of the third magnetic pole 43 and the fourth magnetic pole 44, and then the microswitch 4 drives the conductive strip 3 to move toward/away from the second terminal 2, thereby implementing synchronous on-off of the two high-voltage circuits of the contactor 100, and enhancing sensitivity of the contactor 100.

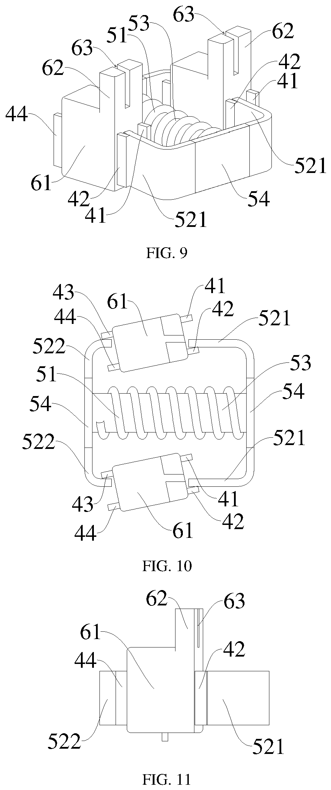

For example, as shown in FIGs. 9 to 11, the contactor 100 is in a first operating state, that is, the first magnetic conductive sheet 521 is engaged with the second magnetic pole 42, and the second magnetic conductive sheet 522 is engaged with the third magnetic pole 43. In this case, the second conduction section 32 can be electrically connected to the second terminal 2, and the high-voltage circuit of the contactor 100 is turned on.

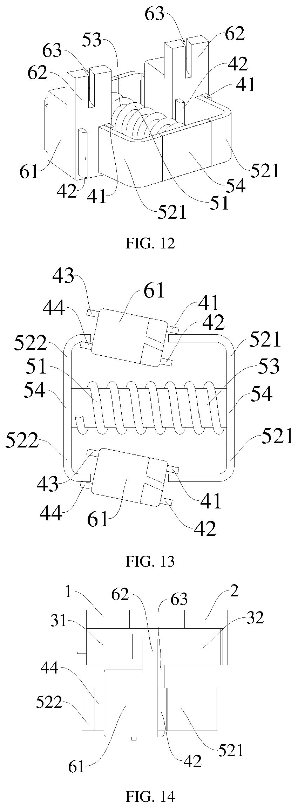

Alternatively, as shown in FIGs. 12 to 14, the contactor 100 is in a second operating state, that is, the first magnetic conductive sheet 521 is engaged with the first magnetic pole 41, and the second magnetic conductive sheet 522 is engaged with the fourth magnetic pole 44. In this case, the second conduction section 32 can be separated from the second terminal 2, and the high-voltage circuit of the contactor 100 is turned off.

In other words, when the contactor 100 is in the first operating state, the high-voltage circuit of the contactor 100 is turned on; and when the contactor 100 is in the second operating state, the high-voltage circuit of the contactor 100 is turned off. Certainly, when the contactor 100 is in the first operating state, the high-voltage circuit of the contactor 100 may alternatively be turned off; and when the contactor 100 is in the second operating state, the high-voltage circuit of the contactor 100 may alternatively be turned on.

Therefore, the first magnetic conductive sheet 521 can be engaged with either of the first magnetic pole 41 and the second magnetic pole 42, and the second magnetic conductive sheet 522 can be engaged with either of the third magnetic pole 43 and the fourth magnetic pole 44, so that the microswitch 4 drives the conductive strip 3 to move toward/away from the second terminal 2, thereby implementing synchronous on-off of the two high-voltage circuits of the contactor 100, and enhancing sensitivity of the contactor 100.

The polarity of the first magnetic conductive sheet 521 is opposite to the polarity of the second magnetic conductive sheet 522. It should be noted that, the polarities of the first magnetic conductive sheet 521 and the second magnetic conductive sheet 522 are determined by a flow direction of a current flowing in the driving coil 51.

A polarity of the first magnetic pole 41 is opposite to a polarity of the second magnetic pole 42, and a polarity of the third magnetic pole 43 is opposite to a polarity of the fourth magnetic pole 44, so that the first magnetic pole 41 and the second magnetic pole 42 are not engaged with each other, and the third magnetic pole 43 and the fourth magnetic pole 44 are not engaged with each other either.

Therefore, during actual operation of the contactor 100, the first magnetic conductive sheet 521 generates a suction force to one of the first magnetic pole 41 and the second magnetic pole 42 whose polarity is opposite to the polarity of the first magnetic conductive sheet 521 and a thrust force to the other, and the second magnetic conductive sheet 522 generates a suction force to one of the third magnetic pole 43 and the fourth magnetic pole 44 whose polarity is opposite to the polarity of the second magnetic conductive sheet 522 and a thrust force to the other, thereby improving rotation efficiency of the microswitch 4, implementing quick on-off of the high-voltage circuit of the contactor 100, and enhancing sensitivity of the contactor 100.

In some embodiments, the polarity of the first magnetic conductive sheet 521 is opposite to the polarity of the second magnetic conductive sheet 522.

Specifically, both the first magnetic pole 41 and the second magnetic pole 42 are constructed with opposite polarities on an inner side and an outer side, and the polarity of the inner side of the first magnetic pole 41 is opposite to the polarity of the inner side of the second magnetic pole 42.

It can be understood that polarities of the inner sides and the outer sides of the first magnetic pole 41 and the second magnetic pole 42 are opposite, a polarity of a side of the first magnetic pole 41 close to the first magnetic conductive sheet 521 is opposite to a polarity of a side of the second magnetic pole 42 close to the first magnetic conductive sheet 521, and a polarity of a side of the first magnetic pole 41 facing away from the first magnetic conductive sheet 521 is opposite to a polarity of a side of the second magnetic pole 42 facing away from the first magnetic conductive sheet 521. This helps improve magnetic sensitivity of the first magnetic pole 41 and the second magnetic pole 42, thereby improving rotation efficiency of the microswitch 4, implementing quick on-off of the high-voltage circuit of the contactor 100, and enhancing sensitivity of the contactor 100.

Both the third magnetic pole 43 and the fourth magnetic pole 44 are constructed with opposite polarities on an inner side and an outer side, and the polarity of the inner side of the third magnetic pole 43 is opposite to the polarity of the inner side of the fourth magnetic pole 44.

It can be understood that polarities of the inner sides and the outer sides of the third magnetic pole 43 and the fourth magnetic pole 44 are opposite, a polarity of a side of the third magnetic pole 43 close to the second magnetic conductive sheet 522 is opposite to a polarity of a side of the fourth magnetic pole 44 close to the second magnetic conductive sheet 522, and a polarity of a side of the third magnetic pole 43 facing away from the second magnetic conductive sheet 522 is opposite to a polarity of a side of the fourth magnetic pole 44 facing away from the second magnetic conductive sheet 522. This helps improve magnetic sensitivity of the third magnetic pole 43 and the fourth magnetic pole 44, thereby improving rotation efficiency of the microswitch 4, implementing quick on-off of the high-voltage circuit of the contactor 100, and enhancing sensitivity of the contactor 100.

It should be noted that, the first magnetic pole 41, the second magnetic pole 42, the third magnetic pole 43, and the fourth magnetic pole 44 are all permanent magnets.

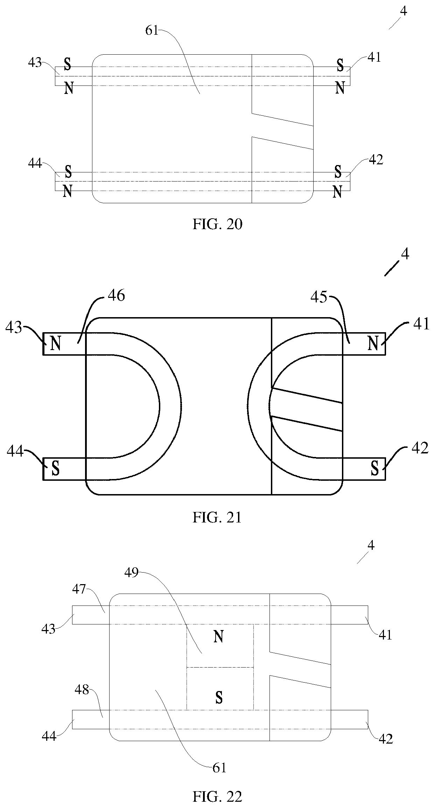

Further, as shown in FIG. 20, the first magnetic pole 41 and the third magnetic pole 43 are integrally formed, and the second magnetic pole 42 and the fourth magnetic pole 44 are integrally formed.

For example, the first magnetic pole 41 and the third magnetic pole 43 are integrally constructed, and the second magnetic pole 42 and the fourth magnetic pole 44 are integrally constructed, which reduces processing difficulty and production costs. In addition, as shown in FIG. 20, the inner sides of the first magnetic pole 41 and the third magnetic pole 43 are both constructed as N poles, the outer sides of the first magnetic pole 41 and the third magnetic pole 43 are both constructed as S poles, the inner sides of the second magnetic pole 42 and the fourth magnetic pole 44 are both constructed as S poles, and the outer sides of the second magnetic pole 42 and the fourth magnetic pole 44 are both constructed as N poles.

This helps improve magnetic sensitivity of the microswitch 4, thereby improving rotation efficiency of the microswitch 4, implementing quick on-off of the high-voltage circuit of the contactor 100, and enhancing sensitivity of the contactor 100.

In some other embodiments, as shown in FIG. 21, the first end (a right end in FIG. 21) of the microswitch 4 is provided with a first magnet 45 constructed in a U shape, two ends of the first magnet 45 are respectively constructed as the first magnetic pole 41 and the second magnetic pole 42, a second end (a left end in FIG. 21) of the microswitch 4 is provided with a second magnet 46 constructed in a U shape, and two ends of the second magnet 46 are respectively constructed as the third magnetic pole 43 and the fourth magnetic pole 44.

It can be understood that in some other embodiments, the first magnetic pole 41 and the second magnetic pole 42 are integrally formed, and the third magnetic pole 43 and the fourth magnetic pole 44 are integrally formed, which reduces processing difficulty and production costs.

In addition, as shown in FIG. 21, the polarity of the first magnetic pole 41 is opposite to the polarity of the second magnetic pole 42, and the polarity of the third magnetic pole 43 is opposite to the polarity of the fourth magnetic pole 44. For example, both the first magnetic pole 41 and the third magnetic pole 43 may be constructed as N poles, and both the second magnetic pole 42 and the fourth magnetic pole 44 may be constructed as S poles. This helps improve magnetic sensitivity of the microswitch 4, thereby improving rotation efficiency of the microswitch 4, implementing quick on-off of the high-voltage circuit of the contactor 100, and enhancing sensitivity of the contactor 100.

In still some other embodiments, as shown in FIG. 22, a first magnetic plate 47 and a second magnetic plate 48 are respectively arranged on two sides of the microswitch 4, a magnetic member 49 is arranged between the first magnetic plate 47 and the second magnetic plate 48, polarities of two ends of the magnetic member 49 are opposite, a polarity of the first magnetic plate 47 is the same as a polarity of a first end of the magnetic member 49, and a polarity of the second magnetic plate 48 is the same as a polarity of a second end of the magnetic member 49. Two ends of the first magnetic plate 47 are respectively constructed as the first magnetic pole 41 and the third magnetic pole 43, and two ends of the second magnetic plate 48 are respectively constructed as the second magnetic pole 42 and the fourth magnetic pole 44.

It can be understood that, in still some other embodiments, magnetism of the first magnetic plate 47 is determined by magnetism of the first end of the magnetic member 49, and magnetism of the second magnetic plate 48 is determined by magnetism of the second end of the magnetic member 49, that is, the first magnetic pole 41 and the third magnetic pole 43 have the same magnetism as the first end of the magnetic member 49, and the second magnetic pole 42 and the fourth magnetic pole 44 have the same magnetism as the second end of the magnetic member 49.

For example, as shown in FIG. 22, the first end (an upper end in FIG. 22) of the magnetic member 49 is constructed as an N pole, and the second end (a lower end in FIG. 22) of the magnetic member 49 is constructed as an S pole, so that both the first magnetic pole 41 and the third magnetic pole 43 at the two ends of the first magnetic plate 47 are N poles, and both the second magnetic pole 42 and the fourth magnetic pole 44 at the two ends of the second magnetic plate 48 are S poles. This helps reduce production difficulty of the microswitch 4, and improve magnetic sensitivity of the microswitch 4, thereby improving rotation efficiency of the microswitch 4, implementing quick on-off of the high-voltage circuit of the contactor 100, and enhancing sensitivity of the contactor 100.

In some other embodiments, the microswitch 4 includes a driving board 61 and a clamping piece 62 connected to the driving board 61. The driving board 61 and the clamping piece 62 may be integrally formed, which reduces processing steps of the microswitch 4 and improves production efficiency.

In still some other embodiments, the driving board 61 is constructed as a magnetic body, and magnetism of an upper portion of the driving board 61 is opposite to magnetism of a lower portion of the driving board 61, so that the polarities of the first magnetic conductive sheet 521 and the second magnetic conductive sheet 522 can be changed by supplying a current in the driving coil 51, the first magnetic conductive sheet 521 can be engaged with either of the first magnetic pole 41 and the second magnetic pole 42, and the second magnetic conductive sheet 522 can be engaged with either of the third magnetic pole 43 and the fourth magnetic pole 44, and then the microswitch 4 drives the conductive strip 3 to move toward/away from the second terminal 2, thereby implementing synchronous on-off of the two high-voltage circuits of the contactor 100, and enhancing sensitivity of the contactor 100.

Further, as shown in FIGs. 10 and 13, the driving board 61 is arranged between the first conduction section 31 and the second conduction section 32, and the first magnetic pole 41, the second magnetic pole 42, the third magnetic pole 43, and the fourth magnetic pole 44 are respectively arranged at four corners of the driving board 61, and are respectively arranged on opposite sides of the driving board 61, so that the first magnetic conductive sheet 521 can extend between the first magnetic pole 41 and the second magnetic pole 42, the second magnetic conductive sheet 522 can extend between the third magnetic pole 43 and the fourth magnetic pole 44, the driving board 61 can drive the four magnetic poles to move synchronously, one of the first magnetic pole 41 and the second magnetic pole 42 is engaged with the first magnetic conductive sheet 521, and one of the third magnetic pole 43 and the fourth magnetic pole 44 is engaged with the second magnetic conductive sheet 522, thereby implementing on-off control over the high-voltage circuit of the contactor 100.

As shown in FIGs. 11, 12, and 14, the clamping piece 62 is provided with a clamping port 63, the clamping port 63 is recessed toward a direction of the driving board 61, and the second conduction section 32 is clamped in the clamping port 63, thereby improving structural stability of the second conduction section 32, and enhancing motion stability of the conductive strip 3.

Therefore, a connecting structure does not need to be separately arranged between the driving board 61 and the conductive strip 3, which simplifies an internal structure of the contactor 100 and reduces space for mounting the conductive strip 3, thereby implementing miniaturization design of the contactor 100. In addition, with the clamping port 63 arranged, the driving board 61 easily drives the second conduction section 32 to move toward/away from the second terminal 2, thereby implementing on-off control over the high-voltage circuit of the contactor 100.

In some embodiments, the first terminal 1 and the second terminal 2 are arranged opposite to the conductive strip 3 in a first direction, and at least one of the conductive strip 3, the first terminal 1, and the second terminal 2 is arranged opposite to the driving component 5 in a second direction. The first direction is orthogonal to the second direction.

Referring to FIGs. 5 and 6, the conductive strip 3 is arranged opposite to the first terminal 1 and the second terminal 2 in the first direction, and the driving component 5 is arranged opposite to at least one of the conductive strip 3, the first terminal 1, and the second terminal 2 in the second direction. For example, the first direction corresponds to a length direction or a width direction on a horizontal plane, and the second direction corresponds to a height direction. In this case, the first terminal 1 and the second terminal 2 are arranged at the same height as the conductive strip 3, and the driving component 5 is arranged above or below the conductive strip 3. Optionally, the driving component 5 is arranged below the conductive strip 3, to reduce a dimension of the contactor 100 in the height direction.

In addition, with the foregoing arrangement, the contactor 100 can be arranged in layers, and high-low voltage isolation can be implemented (an upper layer is a high-voltage conduction part, and a lower layer is a low-voltage control part), so that an arc extinguishing manner is not limited to a combination of an inert gas and magnetic blowout for arc extinguishing, and may be implemented through integral infiltration by an insulating liquid. Alternatively, no arc extinguishing structure is arranged. Based on diversity of arc extinguishing manners, the driving component 5 does not need to be insulated or isolated from a chamber, which can resolve a problem of a low-voltage failure. In addition, an inert gas does not need to be injected, and a ceramic and metal brazing process does not need to be performed to process the contactor 100, which can simplify a processing process of the contactor 100, reduce a material process, improve production efficiency, and reduce processing costs of the contactor 100.

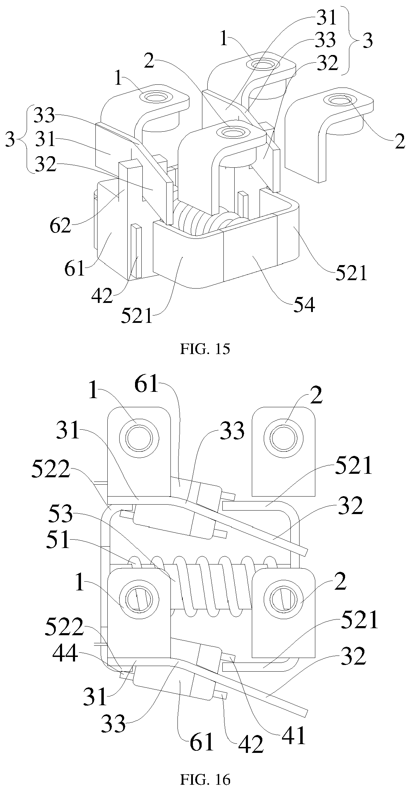

In still some other embodiments, as shown in FIGs. 15 and 16, the conductive strip 3 further includes a flexible connecting piece 33.

The flexible connecting piece 33 is connected between the first conduction section 31 and the second conduction section 32. The second conduction section 32 is adapted to move toward or away from the second terminal 2 through deformation of the flexible connecting piece 33.

It can be understood that the flexible connecting piece 33 in the present disclosure may be made of a flexible metal material (for example, a soft copper composite material or a soft silver composite material), to reduce impact noise and improve use experience of the contactor 100. In addition, using the flexible metal material can increase a current, reduce contact resistance between the second terminal 2 and the conductive strip 3, and reduce a probability of adhesion between the two.

In some embodiments, the contactor 100 further include a sensor 9 and a controller.

The sensor 9 is arranged close to the first terminal 1, the second terminal 2, or the conductive strip 3 to detect a circuit signal of the first terminal 1, the second terminal 2, or the conductive strip 3 in real time. The controller is electrically connected to the sensor 9 to control, according to the circuit signal, the driving component 5 to switch off or switch on the electrical connection between the second conduction section 32 and the second terminal 2.

Optionally, the sensor 9 is arranged close to the conductive strip 3 to detect a circuit signal of the conductive strip 3 in real time, and the sensor 9 can transmit the detected circuit signal of the conductive strip 3 to the controller in real time, so that the controller can control, according to the circuit signal detected by the sensor 9, the conductive strip 3 to be connected to or disconnected from the second terminal 2. Especially in extreme operating conditions, it can be ensured that the high-voltage circuit can be supplied with high-voltage power, to improve safety of the high-voltage circuit.

The controller may be an existing host computer of a vehicle, and the sensor 9 and the host computer use a controller area network (CAN) for communication and control, so that the existing host computer controls the sensor 9, which simplifies a control structure for the sensor 9 and reduces production costs.

Specifically, the controller is configured to obtain a temperature, a voltage, or a current of the first terminal 1, the second terminal 2, or the conductive strip 3 according to the circuit signal. The controller is configured to: for the first terminal 1, the second terminal 2, or the conductive strip 3, when the temperature is greater than a first temperature threshold, and/or the voltage is greater than a first voltage threshold, and/or the current is greater than a first current threshold, control the driving component 5 to rotate the conductive strip 3, so that the second conduction section 32 is separated from the second terminal 2, to switch off the electrical connection between the first terminal 1 and the second terminal 2.

That is, when a signal of the high-voltage circuit detected by the sensor 9 is greater than the first temperature threshold and/or the first voltage threshold and/or the first current threshold, the sensor 9 transmits the circuit signal to the controller, and the controller controls the driving component 5 to rotate the conductive strip 3, so that the second conduction section 32 is separated from the second terminal 2, to switch off the electrical connection between the first terminal 1 and the second terminal 2, thereby disconnecting the contactor 100, and improving safety of the contactor 100.

Further, the controller is configured to: for the first terminal 1, the second terminal 2, or the conductive strip 3, when the temperature is less than a second temperature threshold, and/or the voltage is less than a second voltage threshold, and/or the current is less than a second current threshold, switch on the electrical connection between the second conduction section 32 and the second terminal 2, that is, control the driving component 5 to rotate the conductive strip 3, so that the second conduction section 32 is connected to the second terminal 2, thereby closing the electrical connection between the first terminal 1 and the second terminal 2.

That is, when a signal of the high-voltage circuit detected by the sensor 9 is less than the second temperature threshold and/or the second voltage threshold and/or the second current threshold, the sensor 9 transmits the circuit signal to the controller, and the controller controls the driving component 5 to rotate the conductive strip 3, so that the second conduction section 32 is connected to the second terminal 2, thereby closing the electrical connection between the first terminal 1 and the second terminal 2.

The second temperature threshold is less than or equal to the first temperature threshold, the second voltage threshold is less than or equal to the first voltage threshold, and the second current threshold is less than or equal to the first current threshold.

It can be understood that the circuit signal includes a temperature change, a voltage change, a current change, and the like, and is not limited herein. Therefore, the controller can control the driving component 5 according to one or more of temperature, voltage, and current signals detected by the sensor 9, to control the conductive strip 3 to be connected to or disconnected from the second terminal 2. In addition, the sensor 9 and the controller can be arranged in place of a fuse, so that the fuse does not need to be arranged in the high-voltage circuit of the contactor 100, which can reduce a high-voltage loss, and can ensure that the high-voltage circuit can be supplied with high-voltage power in extreme operating conditions, thereby improving safety of the high-voltage circuit.

In some examples, the sensor 9 is welded on the conductive strip 3, and electrically connected to the host computer. As the conductive strip 3 connects the first terminal 1 and the second terminal 2, both a current carrying capacity and heat productivity of the high-voltage circuit change, and a temperature change occurs correspondingly. The sensor 9 may obtain change information (a temperature change, a current carrying capacity change, and the like) during operation of the high-voltage circuit. The sensor 9 is configured to detect a temperature change of the conductive strip 3, and transmit the temperature change to the controller in a form of a circuit signal. The controller determines, according to the circuit signal, whether a cut-off threshold of the high-voltage circuit is reached, and when the high-voltage circuit needs to be turned off, controls the driving component 5 to release the electrical connection between the second conduction section 32 and the second terminal 2. No fuse needs to be arranged, which reduces a high-voltage loss and costs. In addition, after the contactor 100 is controlled disconnected, if a power consuming device using the contactor 100 of the present disclosure needs to continue operation, it can still be ensured that the power consuming device can be supplied with a high voltage, thereby improving safety.

It should be noted that, the high-voltage circuit is completely turned off after the fuse is blown, while according to the present disclosure, with the controller and the sensor 9 arranged, even if the high-voltage circuit needs to be turned off based on information obtained by the sensor 9, high-voltage power can still be supplied in extreme conditions to improve safety. For example, the contactor 100 of the present disclosure is applied to an electric vehicle. When circuit information indicates that the contactor 100 needs to be disconnected but the vehicle is in a dangerous situation and an operating condition needs to be maintained, a high-voltage power supply state may be maintained, and the electrical connection between the conductive strip 3 and the second terminal 2 can be disconnected after the vehicle drives to a safe position or the dangerous situation passes.

Therefore, the contactor 100 can be prevented from overheating due to an excessively high temperature of the conductive strip 3, which helps enhance safety of the contactor 100. In addition, when the vehicle is in a dangerous situation and an operating condition needs to be maintained, the high-voltage power supply state may be maintained, thereby enhancing practicability of the contactor 100.

Certainly, the sensor 9 may alternatively be arranged in other structural forms at other positions of the high-voltage circuit to detect a circuit signal of the high-voltage circuit. This is not limited herein.

In some embodiments, as shown in FIGs. 1 to 4, the contactor 100 further includes a housing 7.

The housing 7 defines an accommodating space, and the conductive strip 3, the first terminal 1, the second terminal 2, and the driving component 5 are arranged in the accommodating space, so that the conductive strip 3 and the driving component 5 are not directly visible outside the contactor 100. In addition, with the housing 7 arranged, the driving component 5 can be separated from outside, which improves operating stability, reduces interference of an external environment to the driving component 5 and the microswitch 4, and improves control and response efficiency of the low-voltage control part. At least a portion of the first terminal 1 and the second terminal 2 is extended out of the housing 7 to form connecting terminals for electrically connecting the contactor 100 to another structure.

A mounting piece 71 is further arranged outside the housing, and a mounting hole 711 is formed on the mounting piece 71, so that the contactor 100 can be detachably connected to another structure through the mounting piece 71, thereby facilitating attachment/detachment of the contactor 100, and enhancing practicability of the contactor 100.

Further, a low-voltage signal end 8 is further arranged outside the housing 7, and is connected to the driving coil 51.

Optionally, in some embodiments, the housing 7 is provided with a harness outlet, and the low-voltage signal end 8 is led out of the housing through the harness outlet. In some other embodiments, the low-voltage signal end 8 is fastened onto the housing 7 in a plug-in form, and the housing 7 is correspondingly provided with a plug-in interface, and a metal wire is led through the plug-in interface into the housing 7 for electrical connection to the driving coil 51, so that appearance of the contactor 100 of the present disclosure is consistent with appearance of a conventional contactor, which facilitates structural design and material switching, and can reduce a development cycle and development costs.

The present disclosure also provides a charging and distribution system.

The charging and distribution system according to the embodiments of the present disclosure is provided with the contactor 100 in any one of the foregoing embodiments, the contactor 100 is provided with at least two microswitches 4 and conductive strips 3, and the at least two microswitches 4 and conductive strips 3 share the same driving component, so that the at least two microswitches 4 are controlled by the same driving component to rotate simultaneously and drive the at least two conductive strips 3 to rotate simultaneously, thereby implementing synchronous on-off of multiple high-voltage circuits, reducing the number of parts of the driving component 5, reducing the number of risk points, making the contactor 100 more compact in shape, and facilitating miniaturization and lightweight design of the contactor 100.

The present disclosure also provides a vehicle.

The vehicle according to the embodiments of the present disclosure is provided with the charging and distribution system in any one of the foregoing embodiments, whose contactor 100 is provided with at least two microswitches 4 and conductive strips 3, and the at least two microswitches 4 and conductive strips 3 share the same driving component, so that the at least two microswitches 4 are controlled by the same driving component to rotate simultaneously and drive the at least two conductive strips 3 to rotate simultaneously, thereby implementing synchronous on-off of multiple high-voltage circuits, reducing the number of parts of the driving component 5, reducing the number of risk points, making the contactor 100 more compact in shape, and facilitating miniaturization and lightweight design of the contactor 100. In addition, using the contactor 100 can improve operating stability and use safety of the charging and distribution system of the vehicle, and prolong the service life.

The present disclosure also provides a charging pile.

The charging pile according to some embodiments of the present disclosure is provided with the contactor 100 in any one of the foregoing embodiments, the contactor 100 is provided with at least two microswitches 4 and conductive strips 3, and the at least two microswitches 4 and conductive strips 3 share the same driving component, so that the at least two microswitches 4 are controlled by the same driving component to rotate simultaneously and drive the at least two conductive strips 3 to rotate simultaneously, thereby implementing synchronous on-off of multiple high-voltage circuits, reducing the number of parts of the driving component 5, reducing the number of risk points, making the contactor 100 more compact in shape, and facilitating miniaturization and lightweight design of the contactor 100. In addition, using the contactor 100 can improve use safety of the charging pile.

In the description of the present disclosure, it should be understood that orientation or position relationships indicated by the terms such as "center", "longitudinal", "transverse", "length", "width", "thickness", "above", "below", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease and brevity of illustration and description, rather than indicating or implying that the mentioned apparatus or element needs to have a particular orientation or needs to be constructed and operated in a particular orientation. Therefore, such terms should not be construed as limitations to the present disclosure.

In the description of the present disclosure, a "first feature" or a "second feature" may include one or more such features.

In the description of the present disclosure, "multiple" means two or more.

In the description of the present disclosure, the first feature being "on" or "under" the second feature may mean that the first feature and the second feature are in direct contact, or may mean that the first feature and the second feature are not in direct contact but in contact through another feature therebetween.

In the description of the present disclosure, the first feature being "on", "above", or "over" the second feature means that the first feature is right above or not right above the second feature, or merely indicates that a level of the first feature is higher than a level of the second feature.

In the description of this specification, the description of the reference terms such as "an embodiment", "some embodiments", "exemplary embodiments", "example", "specific example", or "some examples" means that features, structures, materials, or characteristics described with reference to the embodiment or example is included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more embodiments or examples.

Although the embodiments of the present disclosure have been shown and described, a person of ordinary skill in the art may understand that various changes, modifications, replacements, and variations may be made to the embodiments without departing from the principle and spirit of the present disclosure, and the scope of the present disclosure is defined by the appended claims and their equivalents.

## Claims

1. A contactor (100), comprising:
a terminal group comprising a first terminal (1) and a second terminal (2);
a conductive strip (3) comprising a first conduction section (31) and a second conduction section (32) being movably connected, the first conduction section (31) being connected to the first terminal (1);
a microswitch (4) connected to the second conduction section (32), at least two microswitches (4), at least two conductive strips (3), and at least two terminal groups being arranged and in a one-to-one correspondence; and
a driving component (5) configured to drive the at least two microswitches (4) to rotate for driving to implement selective disconnection or connection between corresponding second conduction sections (32) and second terminals (2).

2. The contactor (100) according to claim 1, wherein the driving component (5) comprises a driving coil (51) and two magnetic driving pieces (52), and two microswitches (4) are arranged and in a one-to-one correspondence with the two magnetic driving pieces (52), wherein
the driving coil (51) is configured to change a magnetic state of the magnetic driving pieces (52) to drive the microswitches (4) to rotate.

3. The contactor (100) according to claim 2, wherein the driving component (5) further comprises a magnetic column (53) and magnetic conductive plates (54) connected to two ends of the magnetic column (53), the driving coil (51) is wound around the magnetic column (53), and the two magnetic driving pieces (52) are respectively arranged on two sides of the magnetic column (53) and both are connected to the two magnetic conductive plates (54).

4. The contactor (100) according to claim 3, wherein each magnetic driving piece (52) comprises a first magnetic conductive sheet (521) and a second magnetic conductive sheet (522) that are spaced apart, the first magnetic conductive sheet (521) is connected to a magnetic conductive plate (54) at a first end of the magnetic column (53), and the second magnetic conductive sheet (522) is connected to a magnetic conductive plate (54) at a second end of the magnetic column (53); and a first end of the microswitch (4) is provided with a first magnetic pole (41) and a second magnetic pole (42) that are spaced apart, and a second end of the microswitch (4) is provided with a third magnetic pole (43) and a fourth magnetic pole (44) that are spaced apart, wherein
the first magnetic conductive sheet (521) extends between the first magnetic pole (41) and the second magnetic pole (42) for engagement with one of the first magnetic pole (41) and the second magnetic pole (42), and the second magnetic conductive sheet (522) extends between the third magnetic pole (43) and the fourth magnetic pole (44) for engagement with one of the third magnetic pole (43) and the fourth magnetic pole (44).

5. The contactor (100) according to claim 4, wherein a polarity of the first magnetic conductive sheet (521) is opposite to a polarity of the second magnetic conductive sheet (522), a polarity of the first magnetic pole (41) is opposite to a polarity of the second magnetic pole (42), and a polarity of the third magnetic pole (43) is opposite to a polarity of the fourth magnetic pole (44).

6. The contactor (100) according to claim 4, wherein a polarity of the first magnetic conductive sheet (521) is opposite to a polarity of the second magnetic conductive sheet (522);
both the first magnetic pole (41) and the second magnetic pole (42) are constructed with opposite polarities on an inner side and an outer side, and the polarity of the inner side of the first magnetic pole (41) is opposite to the polarity of the inner side of the second magnetic pole (42); and
both the third magnetic pole (43) and the fourth magnetic pole (44) are constructed with opposite polarities on an inner side and an outer side, and the polarity of the inner side of the third magnetic pole (43) is opposite to the polarity of the inner side of the fourth magnetic pole (44).

7. The contactor (100) according to claim 6, wherein the first magnetic pole (41) and the third magnetic pole (43) are integrally formed, and the second magnetic pole (42) and the fourth magnetic pole (44) are integrally formed.

8. The contactor (100) according to any one of claims 4 to 7, wherein the first end of the microswitch (4) is provided with a first magnet (45) constructed in a U shape, two ends of the first magnet (45) are respectively constructed as the first magnetic pole (41) and the second magnetic pole (42), and the second end of the microswitch (4) is provided with a second magnet (46) constructed in a U shape, two ends of the second magnet (46) are respectively constructed as the third magnetic pole (43) and the fourth magnetic pole (44).

9. The contactor (100) according to any one of claims 4 to 8, wherein a first magnetic plate (47) and a second magnetic plate (48) are respectively arranged on two sides of the microswitch (4), a magnetic member (49) is arranged between the first magnetic plate (47) and the second magnetic plate (48), polarities of two ends of the magnetic member (49) are opposite, a polarity of the first magnetic plate (47) is the same as a polarity of a first end of the magnetic member (49), and a polarity of the second magnetic plate (48) is the same as a polarity of a second end of the magnetic member (49), wherein
two ends of the first magnetic plate (47) are respectively constructed as the first magnetic pole (41) and the third magnetic pole (43), and two ends of the second magnetic plate (48) are respectively constructed as the second magnetic pole (42) and the fourth magnetic pole (44).

10. The contactor (100) according to any one of claims 4 to 9, wherein the microswitch (4) comprises a driving board (61) and a clamping piece (62) connected to the driving board (61), the first magnetic pole (41), the second magnetic pole (42), the third magnetic pole (43), and the fourth magnetic pole (44) are respectively arranged at four corners of the driving board (61), the clamping piece (62) is provided with a clamping port (63), and the second conduction section (32) is clamped in the clamping port (63).

11. The contactor (100) according to any one of claims 1 to 10, wherein the first terminal (1) and the second terminal (2) are arranged opposite to the conductive strip (3) in a first direction, and at least one of the conductive strip (3), the first terminal (1), and the second terminal (2) is arranged opposite to the driving component (5) in a second direction, the first direction being orthogonal to the second direction.

12. The contactor (100) according to any one of claims 1 to 11, wherein the conductive strip (3) further comprises a flexible connecting piece (33) connected between the first conduction section (31) and the second conduction section (32), and the second conduction section (32) is adapted to move toward or away from the second terminal (2) through deformation of the flexible connecting piece (33).

13. The contactor (100) according to any one of claims 1 to 12, further comprising: a sensor (9) arranged close to the first terminal (1), the second terminal (2), or the conductive strip (3) to detect a circuit signal of the first terminal (1), the second terminal (2), or the conductive strip (3) in real time; and
a controller electrically connected to the sensor (9) to control, according to the circuit signal, the driving component (5) to switch off or switch on the electrical connection between the second conduction section (32) and the second terminal (2).

14. The contactor (100) according to claim 13, wherein the controller is configured to obtain a temperature, a voltage, or a current of the first terminal (1), the second terminal (2), or the conductive strip (3) according to the circuit signal; and
the controller is configured to: for the first terminal (1), the second terminal (2), or the conductive strip (3), when the temperature is greater than a first temperature threshold, and/or the voltage is greater than a first voltage threshold, and/or the current is greater than a first current threshold, switch off the electrical connection between the second conduction section (32) and the second terminal (2).

15. The contactor (100) according to claim 14, wherein the controller is configured to: for the first terminal (1), the second terminal (2), or the conductive strip (3), when the temperature is less than a second temperature threshold, and/or the voltage is less than a second voltage threshold, and/or the current is less than a second current threshold, switch on the electrical connection between the second conduction section (32) and the second terminal (2), wherein the second temperature threshold is less than or equal to the first temperature threshold, the second voltage threshold is less than or equal to the first voltage threshold, and the second current threshold is less than or equal to the first current threshold.

16. The contactor (100) according to any one of claims 1 to 15, further comprising: a housing (7) defining an accommodating space, the conductive strip (3), the first terminal (1), the second terminal (2), and the driving component (5) being arranged in the accommodating space, and at least a portion of the first terminal (1) and the second terminal (2) being extended out of the housing (7).

17. The contactor (100) according to claim 16, wherein a low-voltage signal end (8) is further arranged outside the housing (7), and is connected to the driving coil (51).

18. A charging and distribution system, the system being provided with the contactor (100) according to any one of claims 1 to 17.

19. A vehicle, the vehicle being provided with the charging and distribution system according to claim 18.

20. A charging pile, the charging pile being provided with the contactor (100) according to any one of claims 1 to 19.
